(19) Europäisches Patentamt
European Patent Office
Office européen des brevets

(11) Numéro de publication: **0 040 152**
**B1**

## (12) FASCICULE DE BREVET EUROPEEN

(45) Date de publication du fascicule du brevet: **31.10.84**

(51) Int. Cl.$^3$: **C 08 G 18/67**, C 09 J 3/16, C 08 F 299/06

(21) Numéro de dépôt: **81400742.3**

(22) Date de dépôt: **11.05.81**

(54) **Résine polyuréthanne thermoplastique à terminaisons isocyanates et comportant des groupements éthyléniques pendants.**

(30) Priorité: **14.05.80 FR 8010805**

(43) Date de publication de la demande:
**18.11.81 Bulletin 81/46**

(45) Mention de la délivrance du brevet:
**31.10.84 Bulletin 84/44**

(84) Etats contractants désignés:
**DE FR GB NL SE**

(56) Documents cités:
**FR-A-1 366 079**
**FR-A-1 418 816**

**CHEMICAL ABSTRACTS, vol. 72, 18-05-1970, page 5, no. 20, ref.: 101171y, Columbus, Ohio, US, K.M. ALEEV et al.: "Synthesis of polyurethanes with unsaturated side chains"**

(73) Titulaire: **SOCIETE NATIONALE DES POUDRES ET EXPLOSIFS**
**12, quai Henri IV**
**F-75181 Paris Cedex 04 (FR)**

(72) Inventeur: **Le Roy, Patrice**
**3, rue Gay-Lussac**
**F-91610 Ballancourt (FR)**
Inventeur: **Journeau, Sabine**
**6, boulevard Jean-Jaurès**
**F-91290 Arpajon (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 040 152 B1

**Description**

L'invention se rapporte à des résines polyuréthannes thermoplastiques réticulables à terminaisons isocyanates comportant des groupements ethyléniques pendants.

L'invention se rapporte également aux compositions utilisables comme enduits collants obtenues à partir de ces résines.

L'invention se rapporte également à un nouveau procédé permettant de mettre en oeuvre ces résines.

On connaît dans l'état de la technique des polyuréthannes élastomères ayant des groupes terminaux isocyanates et acrylates.

Ces polyuréthannes sont le produit de réaction d'un prépolymère, ayant des extrémités isocyanates, obtenu à partir d'un triol, et d'un ester acrylique ou méthacrylique d'un diol, par exemple le monoacrylate de propylène glycol. Les proportions de l'ester acrylique ou méthacrylique sont telles que certains groupes isocyanates restent disponibles à la fin de la réaction.

Toutefois, la structure de ces résines est mal définie du fait que statistiquement on obtiendra des résines dont tous les groupements NCO auront réagi avec les esters acryliques tandis que d'autres posséderont à la fin de la réaction une majorité de groupements NCO encore disponibles.

De plus, du fait de la structure ramifiée du prépolymère ces polyuréthannes ont une faible thermoplasticité ce qui diminue d'autant leur possiblité de mise en oeuvre.

Ces résines sont utilisées comme enduits collants.

Le brevet français 1 418 816 décrit des compositions thermodurcissables dans lesquelles le constituant polymère est un polyuréthanne polyinsaturé à groupements hydroxyterminaux. Ce polyuréthanne est obtenu à partir d'un diisocyanate, d'un diol aliphatique saturé du type polyéther ayant une masse moléculaire comprise entre 300 et 7 000, d'un composé polyhydroxylé au moins trifonctionnel et d'un composé insaturé hydroxylé.

Ces produits ne sont pas thermoplastiques et sont utilisés comme revêtements.

Dans le domaine particulier des colles de complexage (complexes aluminium-polyester, aluminium-polyéthylène) il est nécessaire d'utiliser des colles de basse viscosité.

En effet, les machines couramment utilisées pour cette application nécessitent des produits de très basse viscosité pour permettre le dépôt d'un faible grammage de produit. L'abaissement de la viscosité est obtenu avec les produits traditionnels, soit par un solvant qu'il est nécessaire d'éliminer, soit par un excés d'isocyanate ce qui ne permet pas de préparer des complexes de qualité alimentaire et pose des problèmes d'hygiène chez le complexeur. De plus, les produits traditionnels de faible viscosité entrainent au moment du complexage un glissement des deux films en raison de leur absence de collant (tack) et ne permettent pas la manipulation du complexe tant que les isocyanates n'ont pas suffisamment réagi avec l'humidité atmosphérique.

L'objet de l'invention est de fournir des résines qui peuvent être mises en oeuvre selon les procédés traditionnels bien connus des thermoplastiques (injection, extrusion, mise en solution, moulage par rotation ou par compression), puis réticulées, pour former un réseau tridimensionnel, tout en conservant certaines fonctions isocyanates qui permettront ensuite l'utilisation de ces matériaux comme adhésifs. Les nouvelles résines sont d'un grand intérêt pour préparer les colles de basse viscosité utilisables, par exemple dans l'industrie des complexages avec une machine traditionnelle.

Un autre objet de l'invention est de fournir un nouveau procédé, particulièrement adapté aux résines de l'invention, permettant d'assurer un bon collant avant que les groupements isocyanates aient réagi avec l'humidité atmosphérique, ce qui empêche le glissement des deux films l'un sur l'autre.

Selon l'invention, les résines polyuréthannes réticulables sont caractérisées en ce qu'elles résultent de la réaction de:

a) un diisocyanate organique,

b) un diol saturé dont la masse moléculaire est comprise entre 450 et 4000 et de préférence entre 500 et 2500,

c) un diol insaturé formé par l'ester acrylique ou méthacrylique d'un alcool trihydrique, de formule:

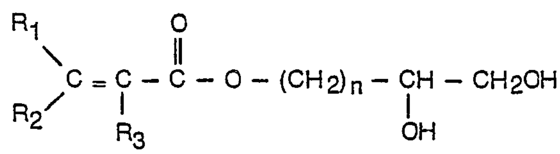

dans laquelle $R_1$, $R_2$ identiques ou différents sont un atome d'hydrogène, un groupe aryle, ou un atome d'halogène,

$R_3$ est un atome d'hydrogène, un groupe méthyle, aryle ou cycloalkyle, ou un atome d'halogène,

n est un nombre entier compris entre 1 et 4,

le composé diisocyanate (a) étant présent dans un rapport NCO:OH supérieur à 1,1,

le rapport molaire diol (b):diol (c) étant compris entre 0 et 3.

Dans la description qui va suivre on désignera par le terme "pendant" les groupements éthyléniques n'ayant pas réagi et qui sont présents semblablement à des branchements tout au long du squelette linéaire de la molécule de polyuréthanne.

Par groupements acryliques on entendra de manière générique toutes les doubles liaisons éthyléniques, substituées ou non, conjuguées avec un groupement carbonyle.

Les diisocyanates qui peuvent être utilisés dans le cadre de l'invention sont bien connus et on peut utiliser avantageusement tous les composés qui contiennent deux groupes NCO libres. Parmi ces composés on mentionne des diisocyanates aliphatiques, cycloaliphatiques et aromatiques de masse moléculaire inférieure à 300 comme par exemple:

les diisocyanates de 1,3- et 1,4-xylylène
les diisocyanates de 2,4- et 2,6-tolylène (TDI)
le diisocyanate de 4,4'-diphénylméthane (MDI)
le diisocyanate de 1,5-naphtylène
les diisocyanates de 1,4- et 1,6 hexaméthylène
le diisocyanate de 1,4 tétraméthylène
le 4,4'-méthylène bis (cyclohexylisocyanate) (commercialisé par la Société DUPONT DE NEMOURS sous le nom d'Hylène W)
le 4,4-isopropyl bis (cyclohexylisocyanate)
le diisocyanate de 1,4-cyclohexyle
le 3-isocyanatométhyl-3,5,5, triméthyl cyclohexyl isocyanate (Isophorone diisocyanate: IPDI)

Habituellement les diisocyanates aromatiques sont utilisés dans des applications qui ne nécessitent pas un haut degré de stabilité à la lumière. Ainsi on utilisera de préférence les isocyanates aliphatiques ou cycloaliphatiques pour les applications nécessitant de bonnes qualités optiques (transparence, absence de coloration), une bonne tenue aux intempéries (tenue aux UV) et de bonnes propriétés à basse température; dans ce cas on utilisera avantageusement le 4,4-méthylène bis (cyclohexylisocyanate).

Par diols longs saturés on entend des macrodiols de masse moléculaire comprise entre 450 et 4000, de préférence entre 500 et 2500 qui peuvent être constitués de groupements polyester, polyéther, polytétrahydrofurane, polycaprolactone, polycarbonate selon l'importance accordée aux caractéristiques spécifiques bien connues apportées par chacun de ces motifs.

Ainsi, il est bien connu que si l'on veut obtenir des résines polyuréthannes résistant à l'hydrolyse et ayant de bonnes propriétés à basse température, il est avantageux d'utiliser des polyéthers, les polyesters apporteront des améliorations au niveau des propriétés mécaniques. Les polycarbonates sont très avantageux du fait de leur excellentes propriétés mécaniques, leur résistance à l'hydrolyse et leurs propriétés adhésives.

Parmi les polyesters on peut citer le polyadipate d'éthylène glycol, de propylène glycol et en général les polyesters préparés à partir d'un diacide saturé ou de son anhydride et d'un diol saturé tel que ceux qui ont été cités précédemment. Comme sous-classe des polyesters on peut citer les polycaprolactones.

On peut également citer les polyéthers-ester tels que d'adipate de poly-diéthylène glycol dans lesquels le polyéther remplace une portion du glycol.

Comme polycarbonates de diols on peut citer les polycarbonates de butane diol ou d'hexanediol.

Parmi les polyéthers, on peut citer les polyéthers d'éthylène glycol, de propylène glycol ou encore le polytétrahydrofuranne.

Parmi les diols insaturés (c) à insaturation acrylique ou méthacrylique, il est particulièrement intéressant d'employer un diol formé par l'ester acrylique ou méthacrylique d'un alcool trihydrique de formule:

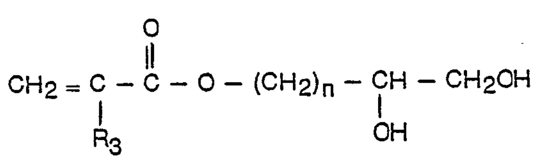

dans laquelle $R_3$ et n ont la même signification que précédemment.

Ces produits sont décrits, notamment, dans le Brevet FR 1 211 430.

En effet, bien qu'il ne soit pas exclu selon l'invention d'utiliser des diols insaturés dont le carbone éthylénique terminal soit substitué (voir formule générale), la réactivité de ces derniers est nettement plus faible.

On accordera la préférence à l'acrylate de dihydroxy-2,3 propyle. Un procédé particulièrement intéressant pour obtenir ce produit a été décrit dans le brevet Français n° 2 391 988 de la société déposante. Afin d'obtenir un prépolymère à terminaisons isocyanates il est nécessaire de préparer la résine polyuréthanne avec un excès de diisocyanate.

Ainsi, on travaillera avec un rapport NCO:OH supérieur ou égal à 1,1, de préférence supérieur ou égal à 1,2.

Pour faciliter les conditions de mise en oeuvre de produit (modifier le comportement rhéologique et diminuer sa viscosité), il peut s'avérer intéressant de limiter le poids moléculaire des polyuréthannes. Dans ce cas il sera avantageux de travailler avec un rapport NCO:OH voisin de 2.

Afin d'obtenir des produits de basse viscosité il est avantageux de travailler avec un rapport diol long (b):diol insaturé compris entre 0,5 et 2,5, de préférence voisin de 2, de manière à ne pas risquer une réticulation prématurée.

Il est également possible d'incorporer une certaine quantité d'extenseurs de chaines tels que des diols courts des alcoolamines ou des diamines à la place du diol insaturé. Le rapport molaire extenseur de chaine:diol insaturé est compris entre 0 et 10.

Un mode approprié pour préparer les résines de l'invention consiste à faire réagir le diol long saturé sur un excès de diisocyanate de manière à obtenir le prépolymère saturé, puis à faire réagir le diol insaturé sur le prépolymère en excès.

On peut également faire réagir le diol insaturé sur un excès de diisocyanate. Le prépolymère insaturé ainsi obtenu pourra être utilisé en l'état ou modifié en un prépolymère plus long en le faisant réagir avec un diol long saturé.

La vitesse de réaction entre l'isocyanate et les polyols peut être augmentée soit par les catalyseurs aminés métalliques bien connus de l'homme de métier, soit par une augmentation de température. On peut opérer à des températures comprises entre 40 et 110°C; toutefois on préférera travailler à des températures inférieures à 70°C. Lorsque l'on veut que la réaction se fasse à température plus élevée, il peut être interessant d'ajouter une petite quantité d'inhibiteur de polymérisation radicalaire pour éviter tout risque de réticulation prématurée. Comme inhibiteur on peut utiliser à titre d'exemple de l'hydroquinone ou de phénothiazine à des quantités comprises entre 0 et 5000 ppm.

Les résines polyuréthannes trouvent une application particulièrement avantageuse dans les compositions pour colles, vernis, peintures et mastics, réticulant à l'humidité. Elles présentent un pouvoir adhésif fortement amélioré en raison des groupements acryliques pendants.

Les résines polyuréthannes à terminaisons isocyanates sont diluées par des monomères insaturés de type acrylique ou vinylique afin de préparer des colles de basse viscosité utilisables par exemple, dans l'industrie des complexages (complexe aluminium-polyester, aluminium-polyéthylène).

Les monomères jouent ainsi un rôle de système diluant réactif. Parmi les monomères on peut citer:

Les monomères vinyliques (acétate de vinyle, N-vinyl pyrrolidone, styrène).

Les monomères acryliques ou méthacrylique (acrylate d'alkyle, phénoxyéthyl, acrylate, diacrylate d'hexanediol, éthoxyéthylacrylate, triméthylolpropane triacrylate, et les équivalents méthacrylates des composés cités ci-dessus).

Toutefois les monomères méthacryliques sont moins intéressants que les acryliques en raison de leur réactivité plus faible.

La viscosité de la composition ainsi formée sera fonction de la proportion de monomères présents. On utilise un rapport résine polyuréthanne:monomère, compris entre 95/5 et 40/60 mais de préférence entre 90/10 et 70/30.

Il a été trouvé qu'il était possible d'améliorer le pouvoir adhésif et les propriétés de ces compositions en y ajoutant un prépolymère saturé à terminaisons isocyanates. Ce prépolymère pourra éventuellement être à base de diol long qui a servi à la synthèse de la résine polyuréthanne selon l'invention.

Selon les cas la proportion en poids de prépolymère saturé:résine polyuréthanne selon l'invention sera compris entre 80/20 et 20/80.

La présente invention a également pour objet un nouveau procédé pour faire adhérer deux supports l'un sur l'autre à l'aide de résines ou des compositions selon la présente invention.

Le procédé de collage consiste à recouvrir un premier support d'une couche, plus ou moins épaisse selon la nature des supports, d'une composition telle que définie ci-dessus. Cette composition est ensuite réticulée.

La réticulation du polyuréthanne insaturé ou mélange polyuréthanne monomère peut se faire selon tous les procédés bien connus de polymérisation radicalaire:

— polymérisation thermique ou par haute fréquence, en présence ou non de promoteurs radicalaires (peroxydes, hydroperoxydes ou promoteur de type azo) aux températures usuelles de polymérisation, de préférence cependant entre 50 et 220°C. A titre d'exemples non limitatifs, on peut citer le peroxyde de dicumyle, le peroxyde de tertiobutyle, le peroxyde de benzoyle, le peroxyde de lauroyle, l'hydroperoxyde de cumène le percarbonate de dicyclohexyle et l'azo-bis-isobutyronitrile).

Il est toutefois avantageux d'employer un moyen de polymérisation à température ambiante sous rayonnement ultra violet, en présence de photoinitiateurs ou de photosensibilisateurs dans les conditions usuelles. A titre d'exemples non limitatifs on peut citer comme photoinitiateurs:les éthers de la benzoïne et les dérivés phénoniques seuls ou en association avec

une amine (benzophénone, diéthoxyacétophénone, Irgacure 651 de CIBA, Darocur 1116 de MERCK).

Ce type de polymérisation est cependant limité aux applications pour lesquelles, d'une part les produits sont peu chargés et d'autre part aux épaisseurs faibles (inférieures à 1 mm et de préférence inférieures à 100 mm).

Le collant (teck) du film ainsi déposé est considérablement augmenté. On applique ensuite le deuxième support et on laisse le produit ainsi obtenu le temps nécessaire pour permettre aux liaisons NCO résiduelle de réticulier.

Les compositions selon l'invention sont utilisables pour des supports de nature très diverses comme, par exemple pour les complexes aluminium-polyester, aluminium-polyéthylène).

L'intérêt de l'invention sera mieux compris à l'aide des exemples que l'on trouvera ci-dessous.

Exemple 1

Préparation d'un prépolymère insaturé à termination isocyanate. On prépare dans un premier temps un intermédiaire A en faisant réagir sur un polyéther diol de poids moléculaire 2000 (PPG 2010 de taux OH 1,07) du diphényl méthane diiasosicyanate (MDI) selon un rapport NCO/OH = 2.

La réaction se fait par addition goutte à goutte de PPG dans le MDI fondu à 80°C. La réaction est terminée en 6H 54mn à 80°C.; la viscosité du produit ainsi obtenu est de 38000 mPas à 22°C, son taux de NCO de 0,85 eq/kg.

On ajoute dans le produit interne intermédiaire A préparé précédemment, de l'acrylate de dihydroxy-2,3 propyle selon un rapport NCO/OH = 2. Après 2 heures de réaction à 60°C on obtient le prépolymère insaturé B dont le taux d'insaturation est de 0,48 et la viscosité à 50°C de 20400 mPas.

Exemple 2

A partir des produits A et B préparés selon l'exemple N° 1, les compositions suivantes sont réalisées:(en partie en poids).

| REFERENCE<br>COMPOSITION | $X_1$ | $X_2$ | $X_3$ | $X_4$ |
|---|---|---|---|---|
| A | 0 | 35 | 45 | 30 |
| B | 70 | 35 | 25 | 30 |
| DILUANT REACTIF EDGA | 30 | 30 | 30 | 40 |
| PHOTOINITIATEUR DAROCUR 1116 | 3 | 3 | 3 | 3 |
| VISCOSITE A 23°C mPas | 19 000 | 6 900 | 6 700 | <1 000 |

formulations $X_1$, $X_2$, $X_3$, $X_4$ sont déposées en faible épaisseur sur une feuille d'aluminium puis l'ensemble passe sous une lampe ultra-violette de puissance 80 watt/cm à une vitesse de 3,8 m/min. Le collant du film ainsi déposé est considérablement augmenté. L'application du film polyéthylène ou polyester se fait immédiatement après l'irradiation U V.

Le complexe est laissé huit jours pour permettre aux fonctions isocyanate de réticuler. Les résistances au pelage des complexes ainsi préparés sont mentionnées ci-dessous.

Valeur de délamination en g/1,5 cm

| REFERENCE | $X_1$ | $X_2$ | $X_3$ | $X_4$ |
|---|---|---|---|---|
| Al/PE | 30 | 110 | 95 | 95 |
| Al/P. ester | 20 | 100 | 100 | 100 |

Exemple 3

A partir des produits A et B préparés selon l'exemple N° 1, la composition suivante est réalisée. (en partie en poids).

prépolymère saturé A: 40

prépolymère insaturé B: 20

phénoxy éthylacrylate: 30

photoinitiateur: 3

DAROCUR 1116

Cette formulation est déposée au moyen d'une machine sur une feuille d'aluminium d'épaisseur 20. Le grammage déposé est de 5,6 g/m$^2$.

La formulation est une viscosité de 6800 mPas à 25°C. L'ensemble est passé sous une lampe ultraviolette comme précédemment.

Les complexes sont réalisés à 50°C avec différents films. Les valeurs de délamination pour chaque film sont indiquées dans le tableau ci-dessous:

| FILM | FORCE DE DELAMINATION g/1,5 cm |
|---|---|
| Polyéthylène | 175 |
| Polyester | 175 |
| Polypropylène | 210 |
| Polyamide | 220 |
| Cellophane | 150 |

**Revendications**

1. Composition adhésive réticulable, caractérisée en ce qu'elle est formée d'un mélange:

A — D'une résine polyuréthanne thermoplastique à terminaisons isocyanates, comportant des groupements éthyléniques pendants et internes, produit de la réaction de:

a) un diisocyanate organique,

b) un diol saturé dont la masse moléculaire est comprise entre 450 et 4000 et de préférence entre 500 et 2500,

c) un diol insaturé formé par l'ester acrylique ou méthacrylique d'un alcool trihydrique, de formule

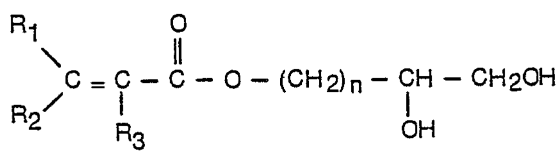

dans laquelle $R_1$, $R_2$ indentiques ou différents sont un atome d'hydrogène, un groupe aryle ou un atome d'halogène,

$R_3$ est un atome d'hydrogène, un groupe méthyle, aryle ou cycloalkyle, un atome d'halogène,

n est un nombre entier compris entre 1 et 4,

le composé diisocyanate (a) étant présent dans un rapport NCO:OH supérieur à 1,1,

le rapport molaire diol (b):diol insaturé (c) étant compris entre 0 et 3, de préférence entre 0,5 et 2,5.

B — D'un solvant réactif choisi parmi les monomères vinyliques ou acryliques,

le rapport en masse résine polyuréthanne A:solvant réactif B étant compris entre 95/5 et 40/60, de préférence entre 90/10 et 70/30.

2. Composition adhésive réticulable selon la revendication 1, caractérisée en ce que le diol insaturé (c) a la formule:

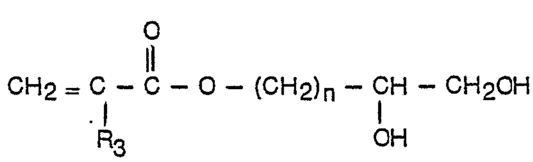

$R_3$ et n ayant la même signification.

3. Composition adhésive réticulable selon la revendication 2, caractérisée en ce que le diol insaturé (c) est l'acrylate ou le méthacrylate de dihydroxy-2,3 propyle.

4. Composition adhésive réticulable selon l'une des revendications précédentes caractérisée en ce que le rapport NCO:OH est voisin de 2.

5. Composition adhésive réticulable selon l'une des revendications précédentes, caractérisée en ce qu'on ajoute, en outre, un prépolymère à terminaisons d'un diol long saturé, la proportion en masse dudit prépolymère par rapport à la résine polyuréthanne étant comprise entre 0,25 et 4.

6. Composition adhésive réticulable selon la revendication 5, caractérisée en ce que le diol long saturé du prépolymère est le même que le diol long (b) de la résine polyuréthanne.

7. Procédé pour faire adhérer deux supports l'un sur l'autre caractérisé, en ce que

1. on recouvre le premier support d'une résine polyuréthanne thermoplastique ou composition adhésive réticulable selon l'une des revendications précédentes.

2. la résine ou composition est réticulée selon un moyen de polymérisation radicalaire.

3. on applique le second support

4. le produit final est ensuite laissé le temps nécessaire à la réticulation des fonctions NCO libres de la résine polyuréthanne.

## Patentansprüche

1. Vernetzbarer Klebstoff, hergestellt aus einem Gemisch von:

A — einem thermoplastischen Polyurethanharz mit endständigen Isocyanatgruppen und anhängenden und internen ethylenischen Gruppen, hergestellt durch Reaktion von:

a) einem organischen Diisocyanat,

b) einem gesättigten Diol mit einer Molmasse von 450 bis 4000 und vorzugsweise von 500 bis 2500,

c) einem ungesättigten Diol, hergestellt aus einem Acryl- oder Methacrylsäureester eines trifunktionellen Alkohols der Formel

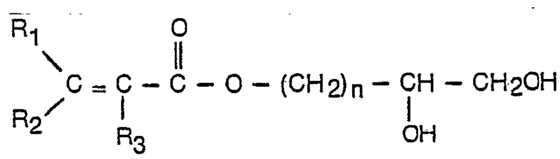

in der $R_1$ und $R_2$ gleich oder verschieden sind und ein Wasserstoffatom, eine Arylgruppe oder ein Halogenatom sind,

$R_3$ ein Wasserstoffatom, eine Methyl-, Aryl- oder Cycloalkylgruppe, ein Halogenatom ist,

n eine ganze Zahl von 1 bis 4 ist,

wobei das Diisocyanat (a) in einem Verhältnis von NCO zur OH über 1,1 vorhanden ist und das Molverhältnis von Diol (b) zu ungesättigtem Diol (c) zwischen 0 und 3, vorzugsweise von 0,5 bis 2,5 ist,

B — einem reaktiven Lösungsmittel ausgewählt unter den Vinyl- oder Acrylmonomeren,

wobei das Massenverhältnis von Polyurethanharz A zu reaktivem Lösungsmittel B von 95:5 bis 40:60, vorzugsweise von 90:10 bis 70:30 beträgt.

2. Vernetzbarer Klebstoff nach Anspruch 1, dadurch gekennzeichnet, daß das ungesättigte Diol (c) die Formel hat:

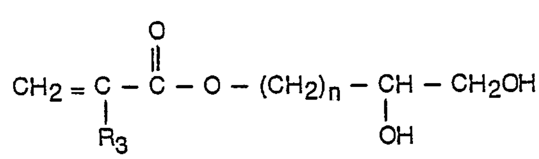

in der $R_3$ und n die gleiche Bedeutung haben.

3. Vernetzbarer Klebstoff nach Anspruch 2, dadurch gekennzeichnet, daß das ungesättigte Diol (c) Dihydroxy-2,3-propyl-acrylat oder -methacrylat ist.

4. Vernetzbarer Klebstoff nach einem der vorhergehenden Ansprüche, dadurch gekennzeichnet, daß das Verhältnis von NCO zu OH um 2 liegt.

5. Vernetzbarer Klebstoff nach einem der vorhergehenden Ansprüche, dadurch gekennzeichnet, daß man außerdem ein Vorpolymeres mit endständigen Isocyanatgruppen eines langkettigen gesättigten Diols zugibt, wobei das Massenverhältnis des genannten Vorpolymeren zum Polyurethanharz von 0,25 bis 4 beträgt.

6. Vernetzbarer Klebstoff nach Anspruch 5, dadurch gekennzeichnet, daß das langkettige gesättigte Diol des Vorpolymeren das gleiche ist wie das langkettige Diol (b) des Polyurethanharzes.

7. Verfahren zum Aufeinanderkleben von zwei Trägern, dadurch gekennzeichnet, daß man

1. den ersten Träger mit einem thermoplastischen Polyurethanharz oder einem vernetzbaren Klebstoff gemäß einem der vorhergehenden Ansprüche überzieht,

2. das Harz oder ein Klebstoff nach einem radikalischen Polymerisationsverfahren vernetzt,
3. den zweiten Träger aufbringt und
4. das Endprodukt solange ruhen läßt, bis die freien NCO-Gruppen des Polyurethanharzes vernetzt sind.

**Claims**

1. A cross-linkable, adhesive composition, characterised in that it is formed from a mixture of:

A — a thermoplastic polyurethane resin with isocyanate end groups, containing side and internal ethylenic groups and which is the product of the reaction of:

a) an organic diisocyanate;

b) a saturated diol having a molecular weight of between 450 and 4000 and preferably between 500 and 2500;

c) an unsaturated diol formed by the acrylic or methacrylic acid ester of a trihydric alcohol, of the formula

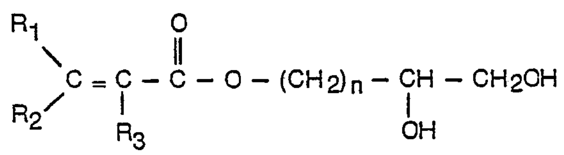

in which $R_1$ and $R_2$, which are identical or different, are a hydrogen or a halogen atom or an aryl group,

$R_3$ is a hydrogen or a halogen atom or a methyl, cycloalkyl or aryl group,

n is an integer between 1 and 4,

the diisocyanate compound (a) being present in a ratio NCO:OH greater than 1.1,

the molar ratio diol (b):unsaturated diol (c) being between 0 and 3, preferably between 0.5 and 2.5,

B — a reactive solvent selected from acrylic and vinylic monomers,

the weight ratio polyurethane resin A:reactive solvent B being between 95/5 and 40/60, preferably between 90/10 and 70/30.

2. A cross-linkable adhesive composition according to Claim 1, characterised in that the unsaturated diol (c) has the formula:

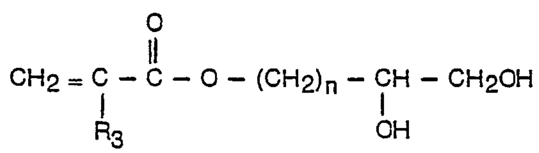

$R_3$ and n having the same meanings as in Claim 1.

3. A cross-linkable adhesive composition according to Claim 2, characterised in that the unsaturated diol (c) is 2,3-dihydroxypropyl acrylate or methacrylate.

4. A cross-linkable adhesive composition according to any one of the preceding claims, characterised in that the ratio NCO:OH is about 2.

5. A cross-linkable adhesive composition according to any one of the preceding claims, characterised in that furthermore there is added a prepolymer of a long-chain saturated diol having isocyanate end groups, the proportion by weight of said polymer with respect to the polyurethane resin being between 0.25 and 4.

6. A cross-linkable adhesive composition according to Claim 5, characterised in that the prepolymer of the long-chain saturated diol is the same as the long-chain diol (b) of the polyurethane resin.

7. Process for sticking two supports together, characterised in that
1. the first support is covered with a thermoplastic polyurethane resin or cross-linkable adhesive composition according to any one of the preceding claims,
2. the resin or composition is cross-linked by means of free radical polymerization,
3. the second support is applied, and
4. the final product is then left for cross-linking of the free NCO groups of the polyurethane resin.